# EUROPEAN PATENT APPLICATION

(11) **EP 4 811 677 A1**
(43) Date of publication of application: **23.09.2026**
(21) Application number: 25165088.3
(22) Date of filing: 20.03.2025
(51) Int. Cl.: H04B 7/185

(54) **METHOD FOR ATTRIBUTING COMPUTATION RESOURCES OF A NON-TERRESTRIAL NETWORK TO AT LEAST ONE IOT-DEVICE**

(71) Applicant: Siemens Aktiengesellschaft, 80333 München (DE)
(72) Inventor: Boriskova, Elizaveta, 80797 München (DE); Magalhães Guimarães, Carlos Eduardo, 69121 Heidelberg (DE); Sauer, Markus, 81739 München (DE); Zeiger, Florian, 85635 Höhenkirchen-Siegertsbrunn (DE)
(74) Representative: Siemens Patent Attorneys

(57) **Abstract**

The present disclosure provides a method for attributing computation resources of a non-terrestrial network to at least one IoT-device. The non-terrestrial network comprises two or more computation nodes moving relative to the at least one IoT-device. The computation resources of the computation nodes are aggregated and abstracted into a logical computation resource that is provided to the at least one IoT-device. A computation demand of the at least one IoT-device is attributed to the resources of the computation nodes with load-balancing. The method may be carried out with a localized component that resides terrestrial and/or in rest with respect to the at least one IoT-device, or with distributed components. The load-balancing considers a spatial arrangement of the computation nodes and may include prognosed trajectories, redundancy, fail-over links, and state-synchronization.

## Description

The invention relates to attributing computation resources of a non-terrestrial network to at least one loT-device

Satellite computing is an emerging paradigm that integrates space-based assets like satellites and terminals on one hand, and ground stations on the other hand into computing networks. This approach aims to extend computing capabilities beyond terrestrial boundaries, potentially offering new solutions for various applications, including industrial Internet of Things (IIoT) scenarios. The upcoming 6G standard is expected to establish a foundation for integrating Terrestrial and Non-Terrestrial Networks, which may lead to changes in how service providers approach mobile computing assets and dynamic network connectivity.

In the context of Industrial Internet of Things (IIoT), the transition to satellite-based computing presents challenges. IloT systems often involve large-scale automation, where hardware, software, and logistics updates can be costly and complex. This can create obstacles for the adoption of novel technologies in industrial settings. Additionally, to maintain compatibility with existing systems, new technologies may require adaptation to fit within the IloT framework.

Load balancing is a common technique used to manage dynamic network changes at the application level. However, when applied to satellite computing networks, traditional load balancing algorithms may not adequately address the unique characteristics of these systems. For instance, conventional algorithms like round-robin or fastest connection selection may not account for the dynamic topology of satellite networks, potentially leading to suboptimal resource allocation and service quality degradation.

Another challenge in satellite computing networks is maintaining persistent connections for IloT devices. Many applications use transport protocol level sessions as indicators of network health, and disruptions in these connections can cause errors or service interruptions. This is particularly problematic in satellite networks, where the movement of satellites and changing network topology can lead to frequent connection changes.

Furthermore, the implementation of service discovery and reconnection mechanisms for IloT devices in satellite networks can be resource intensive. Devices may need to expend significant energy and computing power to find suitable service provider satellites, especially in large constellations where caching all location information is impractical.

Existing traffic steering solutions, such as those used in 5G networks, do not fully address the specific needs of satellite computing networks in IloT contexts. These solutions often lack automatic adaptation of policies, legacy system support, and consideration for the mobile nature of satellite infrastructure. Additionally, they may not adequately address application-level dependencies or the need for dynamic service load balancing in satellite network environments.

It is therefore the object of the present invention to provide a method for attributing computation resources of a non-terrestrial network to at least one loT-device that overcomes one or more of these problems.

This object of the present invention is solved with a method for attributing computation resources of a non-terrestrial network to at least one loT-device with the features contained in claim 1. Advantageous aspects of the invention are contained in the subsequent dependent claims, the following description and the drawing.

According to the invention, a method for attributing computation resources of a non-terrestrial network to at least one loT-device is provided. The non-terrestrial network comprises two or more computation nodes moving relative to the ground and particularly to the at least one loT-device, wherein the computation resources of the computation nodes of the non-terrestrial network are aggregated and abstracted into a logical computation resource that is provided to the at least one loT-device and wherein a computation demand of the at least one loT-device is attributed to the resources of the computation nodes with load-balancing.

This method allows for efficient utilization of dynamic satellite resources while providing a stable and consistent interface to loT devices, thereby improving the overall performance and reliability of satellite-based loT systems.

In another advantageous aspect of the method according to the invention, the computation nodes are satellites.

Utilizing satellites as computation nodes enables wide-area coverage and reduces the need for terrestrial infrastructure, particularly beneficial for remote or hard-to-reach loT deployments.

In another advantageous aspect of the method according to the invention, the load-balancing considers a spatial arrangement of the computation nodes.

By considering the spatial arrangement of satellites, the method can optimize resource allocation based on the current network topology, leading to improved quality of service and/or improved efficiency and/or reduced latency.

In another advantageous aspect of the method according to the invention, load-balancing considers prognosed trajectories of the computation nodes.

Considering future satellite positions allows for proactive load balancing, minimizing service disruptions during satellite handovers and ensuring continuous connectivity for IoT devices.

In another advantageous aspect of the method according to the invention, the method is carried out with a localized component that resides terrestrial and/or in rest with respect to the at least one loT-device.

A localized terrestrial component can reduce latency for IoT devices and provide a stable point of contact, simplifying the integration of satellite resources into existing loT infrastructures.

In another advantageous aspect of the method according to the invention, the method is carried out with distributed components.

Distributed components enhance scalability and fault tolerance of the system, allowing for more robust operation across diverse geographical areas.

In another advantageous aspect of the method according to the invention, the method is carried out with session persistence during a handover of attributions of computation resources across computation nodes of the non-terrestrial network.

Session persistence during handovers ensures uninterrupted service for IoT devices, maintaining application stability even as the underlying satellite network changes.

In another advantageous aspect of the method according to the invention, load-balancing includes and/or considers and/or assumes redundancy and/or fail-over links.

Incorporating redundancy and fail-over mechanisms enhances the reliability of the satellite-based loT system, ensuring continuous operation even in the event of individual satellite failures.

In another advantageous aspect of the method according to the invention, load-balancing is carried out on traffic channels depending on traffic channel capacities.

Channel-aware load balancing optimizes bandwidth utilization, improving overall system efficiency and allowing for better quality of service management.

In another advantageous aspect of the method according to the invention, load-balancing considers multi-channel traffic.

Supporting multi-channel traffic enables more flexible and efficient use of available computation resources, such as satellite resources, potentially increasing the overall capacity of the system.

In another advantageous aspect of the method according to the invention, load-balancing involves state-synchronization.

State synchronization ensures consistency across distributed components, enabling seamless handovers and maintaining data integrity in the dynamic satellite environment.

In a second aspect, an abstraction component is provided that is configured to carry out the method according to one of the previous aspects.

The abstraction component simplifies the integration of satellite resources into loT systems by providing a consistent interface, hiding the complexities of the underlying dynamic network.

In a third aspect, an arrangement of components is provided that is configured to carry out the method according to one of the previous aspects as described above.

This arrangement of components allows for a modular and scalable implementation of the satellite-based loT system, facilitating easier deployment and maintenance across diverse scenarios.

Embodiments of the invention will be described, by way of example, with reference to the following drawings, in which:

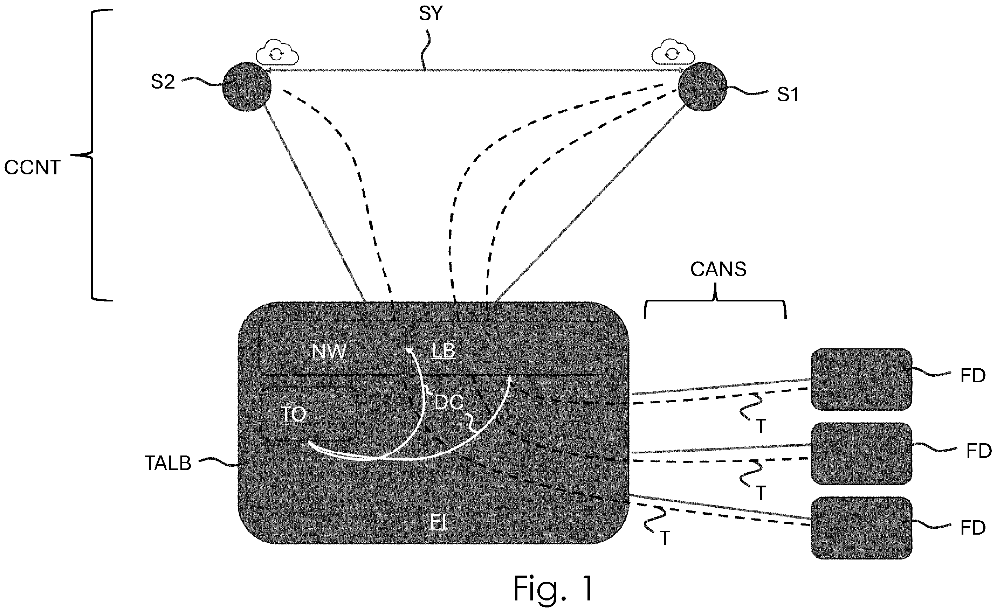

- Fig. 1: illustrates a schematic block diagram of a Topology-Aware Load Balancer system for satellite computing networks, according to aspects of the present disclosure.

Common reference numerals are used throughout the figures to indicate similar features.

The Topology-Aware Load Balancer (TALB) system provides a method for attributing computation resources of a non-terrestrial network to at least one loT-device. FIG. 1 illustrates an overview of the TALB system architecture. The system includes a Topology-Aware Load Balancer TALB, satellites S1 and S2, and Field Devices FD.

The non-terrestrial network comprises two or more computation nodes, represented by the satellites S1 and S2, which move relative to the Field Devices FD. The satellites S1 and S2 form part of a Changing Communication Network Topology CCNT, reflecting the dynamic nature of the satellite network.

The Topology-Aware Load Balancer TALB serves as an abstraction component that aggregates and abstracts the computation resources of the satellites S1 and S2 into a logical computation resource. This logical resource is then provided to the Field Devices FD, which represent IoT devices in the system.

The Topology-Aware Load Balancer TALB system attributes the computation demand of the Field Devices FD to the resources of the satellites S1 and S2 using load-balancing techniques.

The Topology-Aware Load Balancer TALB can be implemented in a centralized or distributed manner. In a centralized implementation, a single TALB unit manages the resource attribution for all connected Field Devices FD. In a distributed implementation, multiple TALB units work together to manage the resource attribution across the network.

The Topology-Aware Load Balancer TALB system includes an arrangement of components configured to carry out the method for attributing computation resources of the non-terrestrial network to the Field Devices FD. This arrangement includes components for aggregating and abstracting computation resources of the satellites S1 and S2 into a logical computation resource, as well as components for load-balancing and managing the dynamic network topology.

The Topology-Aware Load Balancer TALB comprises several components. These components include a Topology Component TO, a Load-Balancing Component LB, and a Networking Component NW.

A Topology Component TO is responsible for fetching and maintaining current topology information of the Changing Communication Network Topology CCNT. The Topology Component TO continuously monitors changes in the topology and link conditions of the satellite network. This information is crucial for the Topology-Aware Load Balancer TALB to make informed decisions about resource attribution and load balancing.

A Load-Balancing Component LB manages client connections to the space infrastructure and attributes computation demand to the resources of the computation nodes. The Load-Balancing Component LB rebalances clients among in-space servers and can perform per-packet channel balancing. The Load-Balancing Component LB considers the spatial arrangement of the computation nodes when making load balancing decisions. Additionally, the Load-Balancing Component LB takes into account prognosed trajectories of the computation nodes to anticipate future network conditions and optimize resource allocation. Furthermore, the Load-Balancing Component LB is designed to handle multi-channel traffic, enabling the system to leverage multiple communication paths simultaneously.

A Networking Component NW establishes underlying uplink connections with satellites, which can be shared by clients. The Networking Component NW works in conjunction with the Load-Balancing Component LB to maintain session persistence during handover of attributions across different computation nodes in the non-terrestrial network.

A Fetching IP Component FI is included in the Topology-Aware Load Balancer TALB to manage IP-related information for the various components in the system. This component assists in maintaining proper addressing and routing within the dynamic satellite network environment.

The satellite workloads allow for in-space processing of traffic, which targets energy saving on ground station processing and enables parallelization of big data processing. These workloads are executed on the Satellite S1 and the Satellite S2, leveraging the computational resources available in space. By offloading processing tasks to the satellites, the system reduces the computational burden on ground-based components and improves overall efficiency.

Data Communication DC links, represented by dashed lines in FIG. 1, facilitate the exchange of information between the Topology-Aware Load Balancer TALB and the satellites. These Data Communication DC links are utilized for transmitting both processed data and state synchronization information, ensuring seamless operation of the distributed satellite workloads.

The Topology-Aware Load Balancer TALB receives Traffic T from the Field Devices FD. The Traffic T represents the data streams generated by the Field Devices FD that need to be processed by the in-space compute resources. The Load-Balancing Component LB of the Topology-Aware Load Balancer TALB is responsible for distributing this Traffic T across the available satellite resources.

The Load-Balancing Component LB considers multi-channel traffic when making distribution decisions. This allows the system to efficiently utilize multiple communication channels simultaneously, improving overall throughput and reliability. The Load-Balancing Component LB carries out load-balancing on traffic channels depending on traffic channel capacities. By considering the capacity of each channel, the Load-Balancing Component LB optimizes the distribution of Traffic T to ensure efficient utilization of available bandwidth.

To maintain continuous connectivity between the Field Devices FD and the in-space compute resources, the Topology-Aware Load Balancer TALB establishes Constantly Active Network Sessions CANS. These Constantly Active Network Sessions CANS ensure that the Field Devices FD maintain persistent connections to the satellite network, even as the Changing Communication Network Topology CCNT evolves over time.

The Topology-Aware Load Balancer TALB implements session persistence during a handover of attributions of computation resources across computation nodes. This means that when the Traffic T needs to be redirected from one satellite to another due to changes in the Changing Communication Network Topology CCNT, the Topology-Aware Load Balancer TALB maintains the session state, ensuring a seamless transition for the Field Devices FD.

In scenarios where no satellites are in line of sight, the Topology-Aware Load Balancer TALB can cache sessions and send packets to be processed when in-space resources are back in line of sight. This caching mechanism allows the system to handle temporary loss of satellite connectivity without interrupting the overall operation of the Field Devices FD.

The Topology-Aware Load Balancer TALB can be deployed on a ground station as a relay for connectivity to the satellites. In this configuration, the Topology-Aware Load Balancer TALB acts as an intermediary between the Field Devices FD and the satellite network, managing the Data Communication DC links to the Satellite S1 and the Satellite S2.

By integrating the above-mentioned components and functionalities, the Topology-Aware Load Balancer TALB provides a comprehensive solution for managing network traffic flow and load balancing in a satellite computing network for industrial edge computing scenarios.

## Claims

1. Method for attributing computation resources of a non-terrestrial network to at least one loT-device (FD), the non-terrestrial network comprising of two or more computation nodes (S1, S2) moving relative to the at least one loT-device (FD), wherein the computation resources of the computation nodes (S1, S2) of the non-terrestrial network are aggregated and abstracted into a logical computation resource that is provided to the at least one loT-device and wherein a computation demand of the at least one loT-device is attributed to the resources of the computation nodes with load-balancing.

2. Method according to the previous claims 1, wherein the computation nodes (S1, S2) are satellites.

3. Method according to one of the previous claims, wherein the load-balancing considers a spatial arrangement of the computation nodes (S1, S2).

4. Method according to one of the previous claims, wherein load-balancing considers prognosed trajectories of the computation nodes (S1, S2).

5. Method according to one of the previous claims, wherein the method is carried out with a localized component that resides terrestrial and/or in rest with respect to the at least one IoT-device (FD).

6. Method according to one of the previous claims, wherein the method is carried out with distributed components.

7. Method according to one of the previous claims, that is carried out with session persistence during a handover of attributions of computation resources across computation nodes (S1, S2) of the non-terrestrial network.

8. Method according to one of the previous claims, wherein load-balancing includes or considers redundancy and/or fail-over links.

9. Method according to one of the previous claims, wherein load-balancing is carried out on traffic channels depending on traffic channel capacities.

10. Method according to one of the previous claims, wherein load-balancing considers multi-channel traffic.

11. Method according to one of the previous claims, wherein load-balancing involves state-synchronization.

12. Abstraction component, that is configured to carry out the method according to one of the previous claims.

13. Arrangement of components, that is configured to carry out the method according to one of the previous claims.
